# EUROPEAN PATENT APPLICATION

(11) **EP 4 468 127 A1**
(43) Date of publication of application: **27.11.2024**
(21) Application number: 23174694.2
(22) Date of filing: 23.05.2023
(51) Int. Cl.: G06F 3/041, G06F 3/0346

(54) **TOUCHSCREEN INTERACTIONS**

(71) Applicant: Nokia Technologies Oy, 02610 Espoo (FI)
(72) Inventor: SALMIMAA, Marja Pauliina, Tampere (FI); LEHTINIEMI, Arto Juhani, Lempäälä (FI); VETEK, Akos, Helsinki (FI)
(74) Representative: Nokia EPO representatives

(57) **Abstract**

An apparatus and method, e.g. computer-implemented method is disclosed. The method may comprise, for example, receiving image data from a camera and identifying, from the image data, a remote device having one or more interactive graphical elements displayed by a capacitive touchscreen. The method may also comprise receiving user input indicating an interaction or interactions with at least one of the one or more interactive graphical elements, and transmitting, based on the received user input, one or more electromagnetic field or electromagnetic interference signals towards the one or more interactive graphical elements for effecting an interaction or interactions with the at least one of the one or more interactive graphical elements.

## Description

### Field

Example embodiments describe an apparatus, method and computer program relating to remote interaction with a touchscreen.

### Background

Many devices now comprise touchscreens for receiving user input. Such devices may include smartphones, tablet computers, smart watches, automated teller machines (ATMs), ticket machines, food ordering consoles, queue management machines and so on. Some touchscreens may employ capacitive technology whereby an electric field of the touchscreen is distorted responsive to part of a human body touching its surface. This enables detection and processing of user inputs for different positions on the touchscreen, e.g. to initiate commands, make selections, access services and so on. For example, a queue management system may require a single user input to generate a queue number or numbered ticket indicative of the queue number. For example, an ATM may require user input of a passcode or PIN via a sequence of inputs to a displayed numeric keypad in order to access banking services.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus, comprising: means for receiving image data from a camera; means for identifying, from the image data, a remote device having one or more interactive graphical elements displayed on a capacitive touchscreen thereof; means for receiving user input indicating an interaction with at least one of the one or more interactive graphical elements; and means for transmitting, based on the received user input, one or more electromagnetic field or electromagnetic interference signals towards the one or more interactive graphical elements displayed on the capacitive touchscreen for effecting an interaction with the at least one of the one or more interactive graphical elements.

The apparatus may further comprise means for causing display, by a display screen, of a user interface comprising one or more graphical indications corresponding to the one or more interactive graphical elements displayed by the capacitive touchscreen of the remote device.

The one or more graphical indications may comprise enlarged versions of the one or more interactive graphical elements represented in the image data received from the camera.

The one or more graphical indications may comprise a plurality of graphical indications having the same or similar spatial arrangement as a corresponding plurality of interactive graphical elements displayed by the capacitive touchscreen of the remote device.

The display screen may comprise a touchscreen and wherein the means for receiving user input is configured to receive one or more touch or gestural inputs made with respect to the one or more graphical indications.

The display screen may comprise a display screen of an augmented reality device and wherein the user input receiving means is configured to receive one or more of a voice input and a gestural input associated with the augmented reality device.

The display screen may be configured to display the received image data and the one or more graphical indications, such that the one or more graphical indications overlyie the image data.

The display screen may further comprise: means for displaying, by the display screen, one or more guide indicators for indicating how to align the apparatus with the remote device so that the one or more electromagnetic field or electromagnetic interference signals are directed towards the one or more interactive graphical elements on the capacitive touchscreen of the remote device.

The identifying means may be configured to identify, from the received image data, a type of the remote device and, based on the identified type of the remote device, to identify properties of the one or more interactive graphical elements displayed by the capacitive touchscreen of the remote device.

The apparatus may further comprise: means for detecting that the remote device requires input of first authentication credentials, by means of the one or more interactive graphical elements displayed by the capacitive touchscreen of the remote device; and means for storing first authentication credentials for input to the remote device, wherein the means for receiving user input is configured to receive one or more second authentication credentials for locally authenticating a user to the apparatus, and if the user is locally authenticated using the one or more second authentication credentials, the transmitting means is configured to transmit one or more electromagnetic field or electromagnetic interference signals towards the one or more interactive graphical elements on the capacitive touchscreen of the remote device for effecting input of the first authentication credentials.

The one or more first authentication credentials may comprise one or more of: a passcode; and a predetermined gestural input.

The one or more second authentication credentials may comprise one or more of: biometric data; a passcode; a predetermined gestural input; and an audio passphrase.

The apparatus may further comprise: means for storing received user input indicating one or more interactions with at least one of the one or more interactive graphical elements, wherein the transmitting means is configured to transmit the stored user input, responsive to one or both of: receipt of a transmit input received from a user; and detection that the apparatus is aligned in a predetermined way with the remote device.

The apparatus may comprise one of a smartphone, tablet computer, smartwatch, augmented reality headset or smartglasses.

According to a second aspect, there is described a method, comprising: receiving image data from a camera; identifying, from the image data, a remote device having one or more interactive graphical elements displayed by a capacitive touchscreen; receiving user input indicating an interaction or interactions with at least one of the one or more interactive graphical elements; and transmitting, based on the received user input, one or more electromagnetic field or electromagnetic interference signals towards the one or more interactive graphical elements for effecting an interaction or interactions with the at least one of the one or more interactive graphical elements.

The method may further comprise causing display, by a display screen, of a user interface comprising one or more graphical indications corresponding to the one or more interactive graphical elements displayed by the capacitive touchscreen of the remote device.

The one or more graphical indications may comprise enlarged versions of the one or more interactive graphical elements represented in the image data received from the camera.

The one or more graphical indications may comprise a plurality of graphical indications having the same or similar spatial arrangement as a corresponding plurality of interactive graphical elements displayed by the capacitive touchscreen of the remote device.

The display screen may comprise a touchscreen and wherein receiving user input may comprise receiving one or more touch or gestural inputs made with respect to the one or more graphical indications.

The display screen may comprise a display screen of an augmented reality device and wherein receiving user input may comprise receiving one or more of a voice input and a gestural input associated with the augmented reality device.

The display screen may be configured to display the received image data and the one or more graphical indications, such that the one or more graphical indications overlie the image data.

The display screen may display one or more guide indicators for indicating how to align the apparatus with the remote device so that the one or more electromagnetic field or electromagnetic interference signals are directed towards the one or more interactive graphical elements on the capacitive touchscreen of the remote device.

Identifying may comprise identifying, from the received image data, a type of the remote device and, based on the identified type of the remote device, to identify properties of the one or more interactive graphical elements displayed by the capacitive touchscreen of the remote device.

The method may further comprise detecting that the remote device requires input of first authentication credentials, by means of the one or more interactive graphical elements displayed by the capacitive touchscreen of the remote device; and storing first authentication credentials for input to the remote device, wherein receiving user input may comprise receiving one or more second authentication credentials for locally authenticating a user to the apparatus, and if the user is locally authenticated using the one or more second authentication credentials, transmitting the one or more electromagnetic field or electromagnetic interference signals towards the one or more interactive graphical elements on the capacitive touchscreen of the remote device for effecting input of the first authentication credentials.

The one or more first authentication credentials may comprise one or more of: a passcode; and a predetermined gestural input.

The one or more second authentication credentials may comprise one or more of: biometric data; a passcode; a predetermined gestural input; and an audio passphrase.

The method may further comprise: storing received user input indicating one or more interactions with at least one of the one or more interactive graphical elements, wherein the transmitting may comprise transmitting the stored user input, responsive to one or both of: receipt of a transmit input received from a user; and detection that the apparatus is aligned in a predetermined way with the remote device.

The method may be performed by one of a smartphone, tablet computer, smartwatch, augmented reality headset or smartglasses.

According to a third aspect, there is described a computer program product comprising a set of instructions which, when executed on an apparatus, is configured to cause the apparatus to carry out the method of: receiving image data from a camera; identifying, from the image data, a remote device having one or more interactive graphical elements displayed by a capacitive touchscreen; receiving user input indicating an interaction or interactions with at least one of the one or more interactive graphical elements; and transmitting, based on the received user input, one or more electromagnetic field or electromagnetic interference signals towards the one or more interactive graphical elements for effecting an interaction or interactions with the at least one of the one or more interactive graphical elements.

Optional features of the third aspect may comprise any feature or features of the second aspect.

According to a fourth aspect, there is described a non-transitory computer readable medium comprising program instructions stored thereon for performing a method, comprising: receiving image data from a camera; identifying, from the image data, a remote device having one or more interactive graphical elements displayed by a capacitive touchscreen; receiving user input indicating an interaction or interactions with at least one of the one or more interactive graphical elements; and transmitting, based on the received user input, one or more electromagnetic field or electromagnetic interference signals towards the one or more interactive graphical elements for effecting an interaction or interactions with the at least one of the one or more interactive graphical elements.

Optional features of the fourth aspect may comprise any feature or features of the second aspect.

According to a fifth aspect, there is provided an apparatus comprising: at least one processor; and at least one memory including program code which, when executed by the at least one processor, cause the apparatus to: receive image data from a camera; identify, from the image data, a remote device having one or more interactive graphical elements displayed by a capacitive touchscreen; receive user input indicating an interaction or interactions with at least one of the one or more interactive graphical elements; and transmit, based on the received user input, one or more electromagnetic field or electromagnetic interference signals towards the one or more interactive graphical elements for effecting an interaction or interactions with the at least one of the one or more interactive graphical elements.

Optional features of the fifth aspect may comprise any feature or features of the second aspect.

### Drawings

Example embodiments will now be described, by way of non-limiting example, with reference to the accompanying drawings in which:
FIG. 1 is a front view of a first device which comprises a touchscreen;
FIG. 2 is a front view of a second device which comprises a touchscreen;
FIG. 3 is a front view of a user device;
FIG. 4 is a perspective view of the FIG. 3 user device when used with the FIG. 1 first device according to one or more example embodiments;
FIG. 5 is a front view of the FIG. 3 user device when displaying a captured image of the FIG. 1 first device according to one or more example embodiments;
FIG. 6 is a perspective view of the FIG. 3 user device when transmitting one or more electromagnetic field or electromagnetic interference (EMI) signals to the FIG. 1 first device according to one or more example embodiments;
FIG. 7 is a front view of the FIG. 3 user device when displaying a user interface associated with the FIG. 2 second device according to one or more example embodiments;
FIG. 8 is a perspective view of the FIG. 3 user device when transmitting one or more signals to the FIG. 2 second device according to one or more example embodiments;
FIG. 9 is a front view of the FIG. 3 user device when displaying another user interface associated with the FIG. 2 second device according to one or more example embodiments;
FIG. 10 is a front view of the FIG. 3 user device when used with a third device according to one or more example embodiments;
FIG. 11 is a front view of the FIG. 3 user device when displaying another user interface associated with the third device shown in FIG. 10 according to one or more example embodiments;
FIG. 12 is a front view of the FIG. 3 user device when displaying a captured image of the third device shown in FIG. 10 according to one or more example embodiments;
FIG. 13 is a perspective view of the FIG. 3 user device when transmitting one or more signals to the third device shown in FIG. 10 according to one or more example embodiments;
FIG. 14 is a perspective view of a set of augmented reality (AR) glasses when transmitting one or more signals to the FIG. 2 second device according to one or more example embodiments;
FIG. 15 is a flow diagram showing operations that may be performed according to one or more example embodiments;
Fig. 16 is a schematic block diagram of an apparatus according to one or more example embodiments; and
Fig. 17 is a non-transitory medium for storing computer-readable instructions which, when executed or processed by one or more processors of an apparatus, may perform operations according to one or more example embodiments.

### Detailed Description

Example embodiments relate to an apparatus, method and computer program for remote interaction with a touchscreen.

Many devices comprise touchscreens for receiving one or more user inputs.

Such devices include smartphones, tablet computers, smart watches, automated teller machines (ATMs), transportation ticket machines, food ordering consoles, queue management machines and so on.

Example embodiments may focus on devices having a capacitive touchscreen. A capacitive touchscreen is a display screen that responds to human touch, usually comprising a layer of insulating material (e.g. glass) coated with a transparent conductor. The human body is also an electrical conductor and hence touching the surface of the screen results in a distortion of the screen's electrostatic field, which can be measured as a change in capacitance (i.e. a change in self or mutual -capacitance.) There are different known ways of determining the location of such touch events. However determined, a touch event and its location can enable control of functions and applications executed by the device.

An issue with such devices, particularly public devices which may be used by a potentially large number of people, is hygiene, in the sense that physical touch events may spread disease. Another issue is accessibility. Some people may not be able to reach a touchscreen of a device and/or view what is displayed, e.g. if visually impaired and what is displayed is relatively small. Another issue, which is the case for hand-held devices with touchscreens, is that their size may require two-handed operation; one hand holds the device and the other interacts with the touchscreen. This can hinder proper interaction if the user is moving and has one or both hands occupied.

Example embodiments may mitigate or overcome one or more of the above issues.

In overview, example embodiments employ a technique whereby certain electromagnetic field or electromagnetic interference (EMI) signals cause a change in the electrostatic field of a touchscreen at a certain position such that the signal can be interpreted as a touch event. For example, in an example embodiment, a user may employ a user device (examples of which are described below) which may comprise one or more cameras for capturing images which may be displayed, or caused to be displayed, on a screen. A user may point the user device at a remote device which may comprise a touchscreen having one or more interactive graphical elements displayed by the touchscreen. The user device screen may display a captured image which may include the one or more interactive graphical elements or graphical indications thereof. The user may provide an input to the user device indicating an interaction with at least one of the one or more interactive graphical elements. For example, if the screen of the user device comprises a touchscreen, the user may select, via a touch input to said touchscreen, an area of the captured image which corresponds to at least one of the interactive graphical elements. The user device may then transmit, based on the user input, one or more electromagnetic field or EMI signals towards the one or more interactive graphical elements on the remote device for effecting an interaction with the one or more interactive graphical elements. The one or more electromagnetic field or EMI signals may be transmitted by one or more antennas of the user device in the direction of the one or more interactive graphical elements on the remote device for effecting the interaction.

Further examples will now be described.

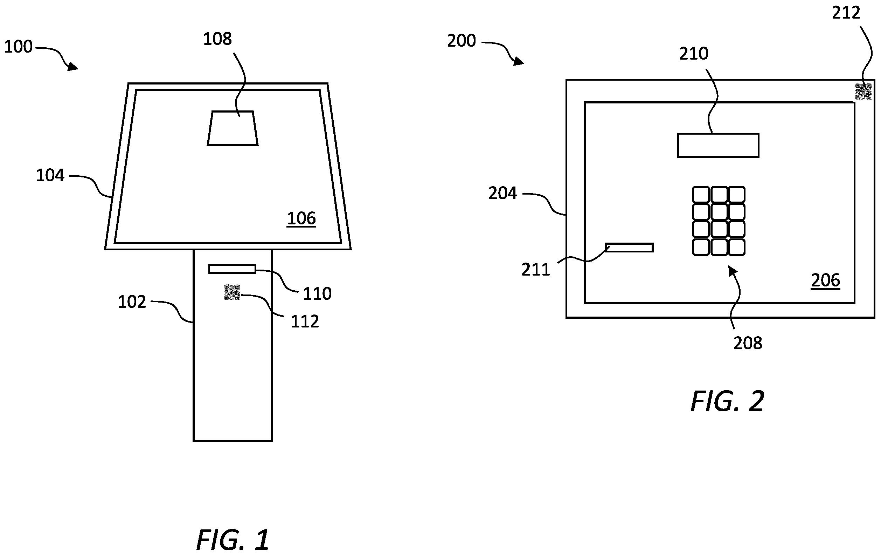

FIG. 1 shows a first device 100, which may be a queue management machine.

The first device 100 may comprise a stand 102 and a display part 104, which carries a touchscreen 106. A first page of a graphical user interface (GUI) provided by a function or application executed by the first device 100 includes an interactive graphical element 108 displayed by the touchscreen 106.

As part of the conventional operation of the first device 100, a touch input to the interactive graphical element 108 may result in an input for receipt by the process or application, e.g. firmware or a software application running on the first device. For example, a software application may issue a queue number for display by the touchscreen 106 and/or cause printing of a paper ticket which shows the queue number. The paper ticket may be discharged via a ticket slot 110.

The first device 100 may also, but not necessarily, carry an identifier 112 for enabling identification of the first device. For example, the identifier 112 may enable identification of one or more of its type, e.g. the make, model, control system and/or software application of the first device 100 to a different, user device.

For example, the identifier 112 may comprise a serial number, a barcode, a quick response (QR) code or similar.

Additionally, or alternatively, identification may be by means of one or more image processing operations that may be used to identify the first device 100 based on, for example, known structural and/or aesthetic features of the first device.

Another device, for example a user device comprising one or more cameras, may capture the identifier 112 and/or or process images of the first device 100, in order to identify one or more properties of the first device 100.

The one or more properties may represent the type of the first device 100, e.g. a queue management machine and/or properties of the one or more interactive graphical elements 108 displayed by the touchscreen 106 of the first device, e.g. the location and/or function of the one or more interactive graphical elements

For example, the one or more properties may indicate the appearance of the one or more interactive graphical elements 108 and/or their respective location(s) on the touchscreen 106 relative to one or more reference locations on the first device 100.

A user device comprising one or more cameras may therefore determine where the one or more interactive graphical elements 108 are on the touchscreen 106 and possibly other information such as text and/or images that are associated with the one or more interactive graphical elements 108. For example, a user device may identify that the interactive graphical element 108 is a red rectangle, is associated with text "PRESS FOR TICKET" and that it is located at a first distance and orientation from the top left-hand corner of the touchscreen 106.

Other methods for identifying the properties of the interactive graphical element 108 may be used.

Identification may be performed locally by a user device, or remotely, e.g. by the user device sending a data message including one or more images and/or the identifier 112 to a remote server which may retrieve the relevant properties and return them to the user device.

For the avoidance of doubt, however, example embodiments described may not involve a specific identification operation.

FIG. 2 shows a second device 200, which may be an ATM.

The second device 200 may comprise a frame 204 housing a touchscreen 206. A first page of a graphical user interface (GUI) provided by a function or application executed by the second device 200 may comprise a plurality of interactive graphical elements 208, in the form of a keypad, and a prompt 210 for a user to enter a passcode (e.g. a PIN) via the keypad.

As part of the conventional operation of the second device 200, a user may insert a bank card into a slot 211. A sequence of user touch inputs to the keypad may result in a sequence of inputs to the executed process or application. For example, an ATM software application may verify an entered passcode or PIN associated with the inserted bank card and, if verified, the touchscreen 206 may enable the user to access one or more services and/or obtain cash.

In some cases, one or more further GUI pages may be displayed which may also comprise one or more interactive graphical elements which may also be interacted with in the manner described below.

The second device 200 may also, but not necessarily, carry an identifier 212 for enabling identification of the second device in the same way, and for the same reasons as for the first device 100.

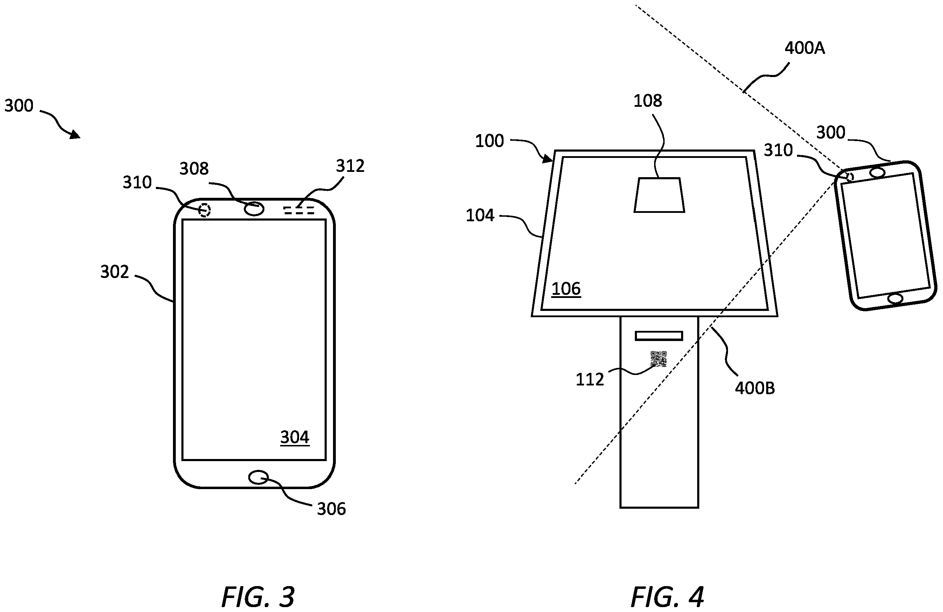

FIG. 3 is a front plan-view of a user device 300 according to some example embodiments.

The user device 300 may be a smartphone or it may alternatively be another form user device comprising one or more cameras. For example, the user device 300 may be a tablet computer, a laptop, a wearable device or a set of augmented reality (AR) glasses, or other form of AR headset such as smartglasses.

The user device 300 comprises a body 302, a touchscreen 304, a microphone 306, a loudspeaker 308, a rear-facing camera 310 and one or more antennas 312. In some cases, the user device 300 may also comprise a front-facing camera.

As explained herein, the user device 300 may interact remotely with a touchscreen device, such as the respective touchscreens 106, 206 of the first device 100 and the second device 200 which are therefore remote devices in this context.FIG. 4 is a perspective view of the user device 300 when used with the first device 100 shown in FIG. 1.

A user of the user device 300 may wish to interact with the first device 100 without having to physically touch the touchscreen 106.

The user may, by one or more user inputs with the user device 300, execute a particular function or application of the user device 300 for performing such remote interactions. The particular function or application may, for example, be a dedicated function or application, or may comprise a part of another function or application such as a customer service application or a banking application. Executing the particular function or application may cause the camera 310 to be enabled for capturing images within a field-of-view of the camera. The field-of-view is indicated between the dashed lines 400A, 400B.

The user may position the user device 300 so that the camera 310 is oriented towards the first device 100.

The camera 310 may capture sufficient image data to enable identification of the first device 100. For example, identification of the first device 100 may comprise capture of image data corresponding to the identifier 112 for obtaining further information, e.g. one or more properties of the first device, which may inform as to the type of first device and/or the location of the interactive graphical element 108.

Alternatively, or additionally, identifying the first device 100 may comprise the user device 300 performing one or more image processing operations, which can be used to obtain the one or more properties. The user device 300 may, for this purpose, utilize local or remote image processing and/or image analysis software.

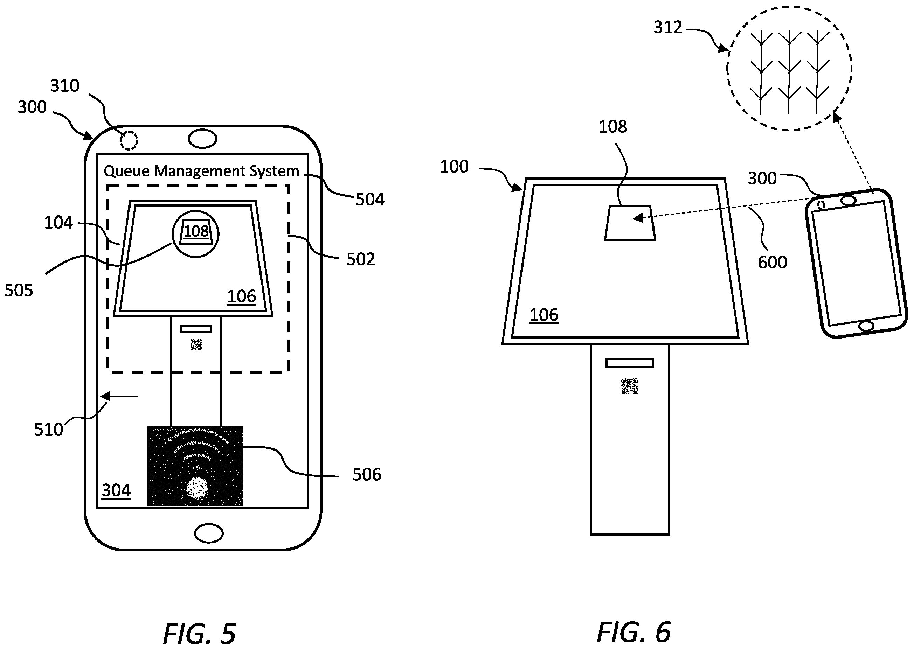

FIG. 5 is a plan view of the user device 300 positioned in front of the first device 100.

The touchscreen 304 of the user device 300 may display images captured by the camera 310. This may assist the user in aligning the user device 300 with the first device 100 for optimal identification and/or remote interaction.

In some examples, as an optional feature, one or more alignment indicators may be output by the user device 300 to assist with its alignment relative to the first device 100. The one or more alignment indicators may comprise visual and/or audible indicators, which may prompt the user to adjust the position of the user device 300 with respect to the first device 100. For example, the dedicated application of the user device 300 may determine that touchscreen 106 and/or interactive graphical element 108 of the first device 100 should be substantially central within the captured image data.

In the shown example, an alignment indicator 510 indicates the user device 300 should be moved to the left for improved alignment.

Upon identification of the first device 100, and based on properties of the first device, one or more augmentations 502, 504, 505 may be displayed, in this case as an overlay to the captured image to help with continued alignment and operation.

In other examples, the one or more augmentations may not be overlaid to the captured image and may be shown on a dedicated GUI.

As shown in FIG. 5, a bounding box 502 may be shown around the image display part 104 of the first device 100. For example, text 504 indicative of the type and/or function of the first device may be shown. For example, a graphical indication 505 of the interactive graphical element 108 may be shown.

The graphical indication 505 may be a shape, e.g. circle or rectangle. Although not shown in FIG. 5, another graphical indication may comprise text indicating the function of the interactive graphical element, e.g. "PRESS FOR TICKET."

In some examples, the one or more augmentations 502, 504, 505 may be shown in a more accessible format, e.g. as enlarged text relative to the corresponding text captured by the camera 310 to make the function of the interactive graphical element 108 more visible and/or readable.

A user may provide one or more user inputs, hereafter interaction input(s), for remote interaction with the interactive graphical element 108.

An interaction input may be received by the user device 300 in one or more ways.

For example, the touchscreen 304 may display a dedicated interaction input button 506 for receiving an interaction input via a touch or a gestural input, e.g. a particular motion of a body part such as a finger or hand, e.g. a swiping or waving motion. Additionally, or alternatively, the graphical indication 505 may itself comprise an interaction input button.

Additionally, or alternatively, an interaction input may be received via a voice command or gestural input that can be detected and actioned by the user device 300. A

In some examples, instead of one or more augmentations displayed to the touchscreen 304, a audio notification as to the type and/or function of the device may be output by the loudspeaker 308 with information as to the function of the interactive graphical element 108. A user wishing to interact with the interactive graphical element 108 may then make an interaction input using any above example input method, including via a voice command or gestural input.

Referring to FIG. 6, responsive to a received interaction input, the user device 300 may be configured to transmit, via its one or more antennas 312, one or more electromagnetic field or electromagnetic interference signals 600 towards a location of the interactive graphical element 108 to simulate a touch event at that location. The user device 300 may enable the one or more antennas 312, which may generate the electromagnetic field or electromagnetic interference signals with signal properties suitable for simulating a touch or gestural input at said location.

The one or more antennas 312 may comprise a plurality of antennas 312, i.e. an antenna array which, by means of signal processing methods such as beamforming (e.g. constructive and destructive interference) may produce directional waves with greater precision.

Based on the location of the interactive graphical element 108 within the captured image, the user device 300 may estimate the required direction of the one or more electromagnetic field or electromagnetic interference signals 600 to effect a so-called invisible touch to the location of the interactive graphical element.

The first device 100 may then proceed with its conventional functionality as if the user had physically interacted with the touchscreen 106.

The use of so-called electromagnetic interference (EMI) signals, sometimes called intentional EMI or IEMI, to effect so-called invisible touches to a capacitive touchscreen, may work as follows.

In one example, a touchscreen may comprise a grid of receive lines, including a plurality of vertical receive lines and a plurality of horizontal receive lines, which are energised in sequence (a vertical sequence and a horizontal sequence). A sensing circuit may samples signals received from each of the vertical and horizontal receive lines. A change in capacitance at a certain time can be interpreted by the sensing circuit as a touch event at a certain intersection of the vertical and horizontal receive lines. By transmitting one or more electromagnetic field or EMI signals towards a certain position on the touchscreen, it is possible to change the electrostatic field at that position so that the sensing circuit interprets the disturbance as a touch event. The one or more electromagnetic field or EMI signals may, for example, be broadband signals which may be transmitted in such a way as to synchronise with the energising of the receive lines, e.g. using the same frequency, although other methods are possible, e.g. by use of an appropriately configured antenna using a short pulse, for which refer to H. Shan, B. Zhang, Z. Zhan, D. Sullivan, S. Wang and Y. Jin, "Invisible Finger: Practical Electromagnetic Interference Attack on Touchscreen-based Electronic Devices," 2022 IEEE Symposium on Security and Privacy (SP), San Francisco, CA, USA, 2022, pp. 1246-1262

According to some examples, a sensing circuit associated with the touchscreen 106 of the first device 100 may be configured to recognize a touch event when |VT| ≥Vth, where VT is an output voltage that can be calculated from one or more of a detected mutual capacitance, change in mutual capacitance, and voltage over the capacitance, and where Vth is a predetermined threshold voltage.

Alternatively, or additionally, according to some examples, a sensing circuit associated with the touchscreen 106 of the first device 100 may recognise a touch event using a multi-cycling sensing method. For example, a touch event may be detected when ΣVT|≥Vth_{N}, where ΣVT is a sum of voltages over N cycles and Vth_{N} is a predetermined threshold voltage defined over N cycles.

Alternatively, or additionally, according to some examples, a sensing circuit associated with the touchscreen 106 of the first device 100 may recognise a touch event using a data-driven approach. For example, the first device 100 may use a learned model, such as a generative adversarial network, for reconstructing electromagnetic field or electromagnetic interference signal contact "shapes" and separating adjacent touch events to avoid them being interpreted as a single touch event.

It will be appreciated that, based on knowledge of how particular touchscreens (such as the respective touchscreens 106, 206 of the first and second devices 100, 200) operate, in terms of how their sensing circuits respond to particular levels of electromagnetic field or EMI signals, and at what frequencies, the user device 300 can be appropriately tuned to effect remote interactions therewith. It may also be appreciated that some forms of touchscreens and/or their sensing circuits can themselves be adapted to be responsive to certain particular levels and/or frequencies of electromagnetic field or EMI signals for the purposes described herein.

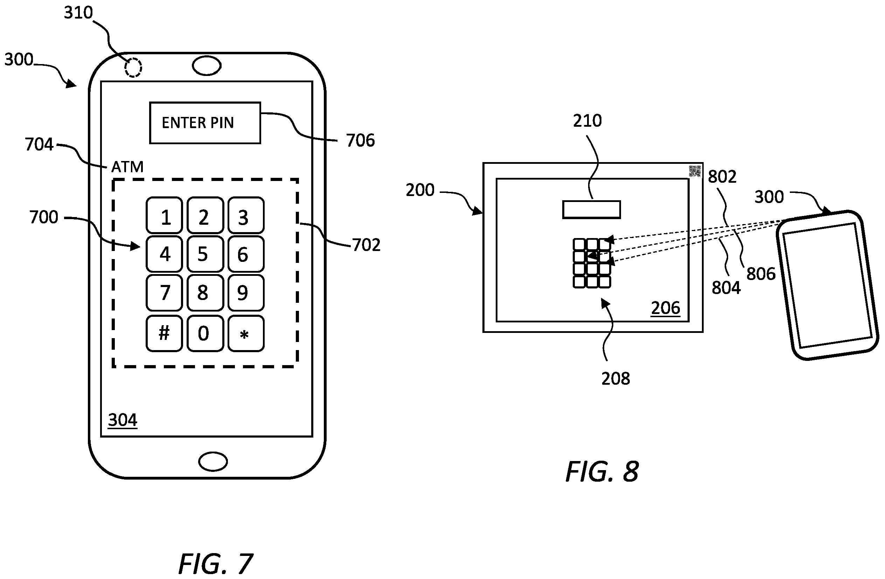

FIG. 7 is a plan view of the user device 300 when positioned in front of the second device 200, i.e. the ATM, referred to above with respect to FIG. 2.

The touchscreen 304 of the user device 300 may display images captured by the camera 310.

As with the earlier example, this may assist the user in aligning the user device 300 with the second device 200 for identification and subsequent remote interaction. As with the earlier example, one or more alignment indicators may be provided by the user device 300 to assist with alignment relative to the second device 200.

Upon identification of the second device 200, and based on properties of the second device, one or more augmentations 702, 704, 705 may be displayed.

The one or more augmentations 702, 704, 705 may or may not be overlaid to the captured image.

For example, a bounding box 702 may be shown with associated text 704 indicating that the second device 200 is an ATM.

For example, a plurality of graphical indications 700, corresponding to the interactive graphical elements 208 of the second device 200 may be shown.

The plurality of graphical indications 700 may comprise a captured image of the interactive graphical elements 208 of the second device 200 or may comprise a computer-generated version of the keypad.

The plurality of graphical indications 700 may comprise enlarged versions of the one or more interactive graphical elements 208 of the second device 200, for example to make numbers on the interactive graphical elements more visible and/or readable. In this context, enlarged means that the enlarged versions of the one or more interactive graphical elements 208 are made larger than they appear in the captured image of the interactive graphical elements.

The plurality of graphical indications 700 may have the same or similar spatial arrangement as the corresponding interactive graphical elements 208 of the second device 200, although other spatial arrangements may be used. By keeping the same or similar spatial arrangement, the user may better recognise a required pattern of inputs from memory corresponding to, for example, their passcode or PIN.

A further augmentation 706 may comprise a passcode or PIN prompt for informing the user to enter their passcode or PIN, responsive to capture of a corresponding prompt 210 on the touchscreen 206 of the second device 200.

The user may provide sequence of user inputs, hereafter interaction inputs, for remote interaction with the interactive graphical element 108.

An interaction input may be received by the user device 300 in one or more ways.

For example, the graphical indications 700 may be individually interactive via the touchscreen 304 of the user device 300. A user may touch a sequence of the graphical indications 700 corresponding to their passcode or PIN. Additionally, or alternatively, interaction inputs may be received via a sequence of voice commands and/or one or more gestural inputs that can be detected and actioned by the user device 300.

Referring to FIG. 8, responsive to a received sequence of interaction inputs corresponding to a passcode or PIN, the user device 300 may be configured to transmit, via its one or more antennas 312, electromagnetic field or electromagnetic interference signals 802, 804, 806 towards corresponding interactive graphical elements 208 to simulate at corresponding locations the same sequence of touch events.

The user device 300 may enable the one or more antennas 312 which may generate the electromagnetic field or electromagnetic interference signals with the appropriate directions and signal properties to effectuate the simulated touch events.

The second device 200 may then proceed with its conventional functionality, e.g. verifying the passcode or PIN, as if the user had physically interacted with the touchscreen 206.

In another example, the user device 300 of FIG. 3 may detect that a remote device requires input of first authentication credentials, e.g. a passcode or PIN, or a predetermined gestural input, by means of one or more interactive graphical elements on a touchscreen of the remote device.

The user device 300 may store, e.g. in secure digital wallet or similar memory space, data representing one or more sets of authentication credentials, including those first authentication credentials requested by the remote device. For example, the first authentication credentials may represent a passcode or PIN or predetermined gestural input associated with the remote device, or a username or bank account that may be accessed by the remote device.

Based on identification of, for example, the particular device, username or bank account, the user device 300 may determine which stored first authentication credentials to send to the remote device.

The user device 300 may, at this time, request one or more second, different authentication credentials for locally authenticating the user to the user device. The second authentication credentials may comprise one of, for example, biometric data such as by using fingerprint verification, facial recognition, another passcode, another predetermined gestural input and/or an audio passphrase. The second authentication credentials may the same as that used, for example, to unlock a lock screen of the user device 300. As such, the second authentication credentials may be received using input means such as, for example, one or more fingerprint sensors, one or more cameras 310, the touchscreen 304 and/or one or more microphones of the user device 300 which are not necessarily the same input means used for other described applications of the user device, e.g., as explained with reference to other example embodiments described herein.

If the user is locally authenticated using the one or more second authentication credentials, the user device 300 may be configured to transmit one or more electromagnetic field or electromagnetic interference signals 802, 804, 806 towards the one or more interactive graphical elements 208 on the touchscreen 206 of the remote device 200 for effecting input of the determined first authentication credentials

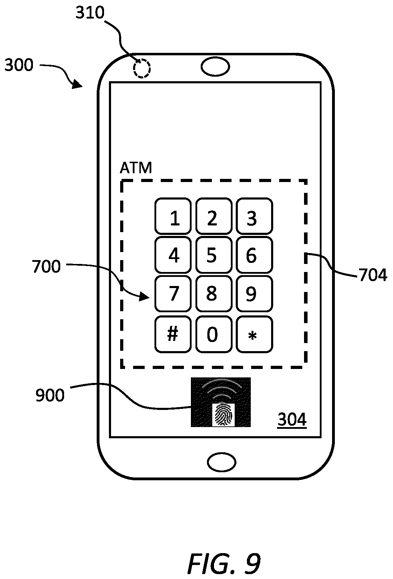

FIG. 9, for example, is a plan view of the user device 300 when positioned in front of the second device 200, i.e. the ATM, referred to above with respect to FIG. 2. The user device 300 may determine that a particular set of first authentication credentials (e.g. a first passcode or PIN) is required to access a particular bank account via this ATM and that said first authentication credentials are stored locally at the user device.

The user device 300 may display a biometric input panel 900 for receiving and authenticating locally a user using, in this example, fingerprint verification. Alternatively, the user device 300 may request input of a passcode, PIN, facial, gestural input or voice input for local verification.

If the user is authenticated locally using, in this case, fingerprint verification, the user device 300 may (as in the case of FIG. 8) transmit one or more electromagnetic field or electromagnetic interference signals 802, 804, 806 corresponding to the sequence of first authentication credentials towards the appropriate sequence of interactive graphical elements 208 on the touchscreen 206 of the second device 200.

In this example, an additional level is security is provided because the user need not enter their first authentication credentials in a potentially public setting.

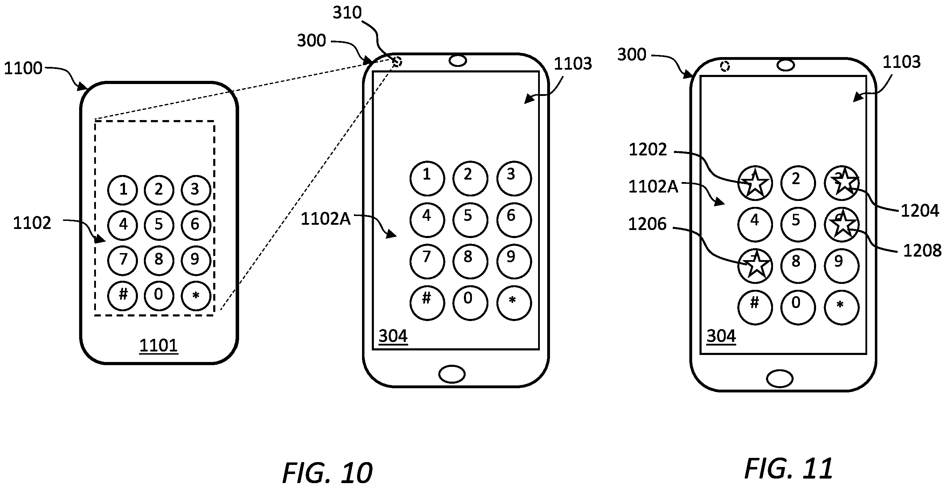

In another example, and with reference to FIG. 10, the user device 300 may capture and store an image 1103 of a remote device, hereafter "third device" 1100 having a touchscreen 1101.

The third device 1100 may display one or more interactive graphical elements 1102 which may comprise (but are not limited to) another keypad, e.g. for unlocking a lock screen of the third device.

The captured image 1103 may be processed by the user device 300 to identify pixel regions representing the interactive graphical elements 1102. The pixel regions may be converted into interactive graphical indications 1102A suitable for receiving interaction inputs via the touchscreen 304 of the user device 300.

The captured image 1103, including interactive graphical indications 1102A, may be stored at the user device 300 for later retrieval.

With reference to FIG. 11, a user may at the current, or a later time, make one or more interaction inputs 1202, 1204, 1206, 1208 to at least a subset of the interactive graphical indications 1102A.

The one or more interaction inputs 1202, 1204, 1206, 1208 may be stored at the user device 300. The user device 300 may not automatically transmit electromagnetic field or electromagnetic interference signals towards the corresponding one or more interactive graphical elements 1102 responsive to the one or more interaction inputs 1202, 1204, 1206, 1208.

For example, the user may wish to move away from the third device 1100 after capturing the image 1103.

The user may wish to have more privacy and/or zoom-in on the image 1103 to better understand the interactive graphical indications 1102A.

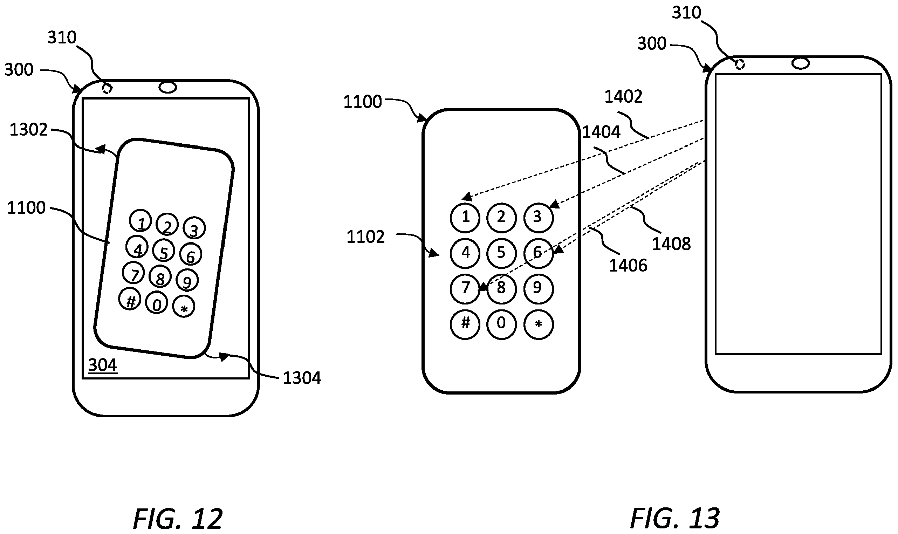

With reference to FIG. 12, the user may at a later time return to the third device 1100 with the intention of authenticating themselves using the stored one or more interaction inputs.

The user device 300 may again capture the third device 1100 using the one or more cameras 310 of the user device for the purpose of identification. After identification, optionally, one or more guide indicators 1302, 1304 may be displayed indicating how to align the user device 300 with the third device 1100 so that the electromagnetic field or electromagnetic interference signals will be more accurately directed towards the one or more interactive graphical elements 1102.

With reference to FIG. 13 the user device 300 may transmit in sequence one or more electromagnetic field or electromagnetic interference signals 1402, 1404, 1406, 1408 towards the one or more interactive graphical elements 1102 based on the stored one or more interaction inputs. Transmission may occur upon detection that the user device 300 is aligned in a predetermined way with the third device 1100 and/or upon receipt of userreceived input, e.g. a dedicated transmit input (touch, gestural input, voice, or authenticated local input as per the earlier example).

In this way, a user may make their interaction inputs in a way that is more convenient and accessible to them.

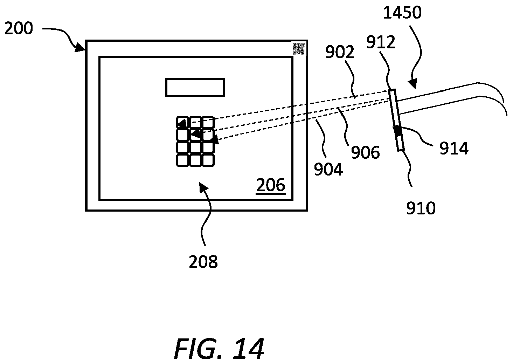

FIG. 14 shows how an alternative form of user device, in this case a set of AR glasses 1450, which may be used to provide the same or similar functionality as the user device 300 described above in any described example. As a further alternative, the user device may be an AR headset.

The AR glasses 1450 may comprise a pair of lenses 910, one or more cameras 912 and one or more antennas 914.

For example, the graphical indication 505 shown in FIG. 5 or the graphical indications 700 shown in FIG. 7 may be projected to the pair of lenses 910 to produce, respectively, a virtual interactive element or keypad in a user's field-of-view.

The user may make one or more interaction inputs via gestural inputs, e.g. motion of one or more body parts, e.g. one or more fingers or hands, that may be detected by one or more of motion sensors and/or the one or more cameras 912.

Additionally, or alternatively, a user may make one or more interaction inputs via voice commands.

Additionally, or alternatively, a user may use the AR glasses 1450 with the user device 300.

For example, a user may touch a sequence of the graphical indications 700 via the touchscreen 304 of the user device 300 in the same way as for the FIG. 7 example.

However, the interaction inputs are received, one or more electromagnetic field or electromagnetic interference signals 902, 904, 906 may be transmitted by the one or more antennas 914 of the AR glasses 1450. This obviates the need for the user device 300 to transmit said signals.

The AR glasses 1450 may be a more convenient and intuitive way for the user to align the one or more antennas 914 with a touchscreen of a remote device, e.g. the second device 200.

Where local authentication is a requirement for sending stored authentication credentials, as in the FIG. 9 example, the AR glasses 1450 shown in FIG. 14 may authenticate the user locally by means of iris and/or voice recognition.

Example embodiments provide an intuitive way for users to remotely interact with a touchscreen device which may offer advantages in terms of one or more hygiene, security, privacy and convenience. There is furthermore no requirement for the user device 300 to be paired with the remote device 100, 200, 1100 to achieve said advantages.

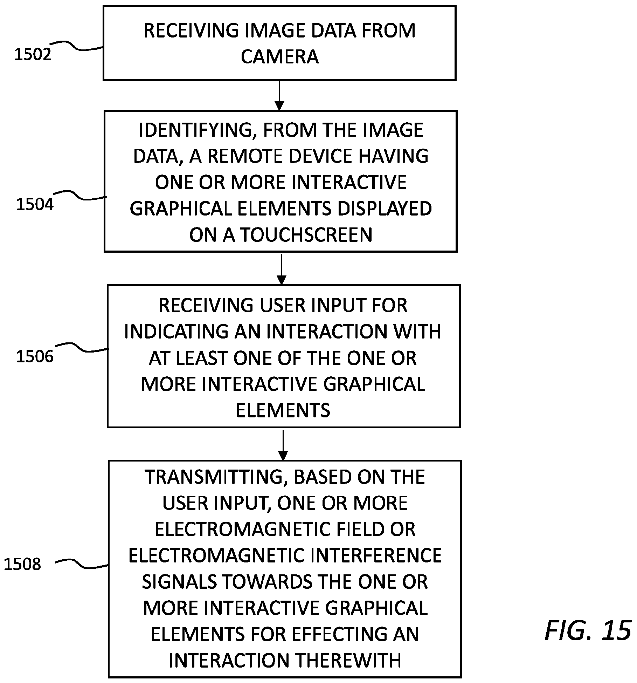

FIG. 15 is a flow diagram showing operations that may be performed by one or more example embodiments. The operations may be performed by hardware, software, firmware or a combination thereof. The operations may be performed by one, or respective, means, a means being any suitable means such as one or more processors or controllers in combination with computer-readable instructions provided on one or more memories.

A first operation 1502 may comprise receiving image data from a camera.

A second operation 1504 may comprise identifying, from the image data, a remote device having one or more interactive graphical elements displayed on a capacitive touchscreen.

A third operation 1506 may comprise receiving user input for indicating an interaction with at least one of the one or more interactive graphical elements.

A fourth operation 1508 may comprise transmitting, based on the received user input, one or more electromagnetic field or electromagnetic interference signals towards the one or more interactive graphical elements displayed on the capacitive touchscreen for effecting an interaction therewith.

### Example Apparatus

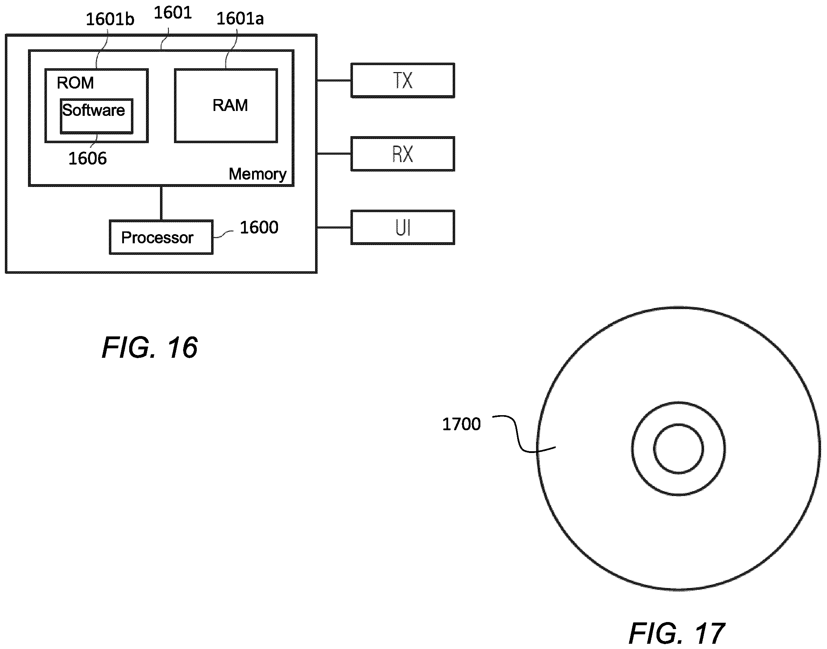

FIG. 16 shows an apparatus according to some example embodiments. The apparatus may be configured to perform the operations described herein, for example operations described with reference to any disclosed process. The apparatus comprises at least one processor 1600 and at least one memory 1601 directly or closely connected to the processor. The memory 1601 includes at least one random access memory (RAM) 1601a and at least one read-only memory (ROM) 1601b. Computer program code (software) 1606 is stored in the ROM 1601b. The apparatus may be connected to a transmitter (TX) and a receiver (RX). The apparatus may, optionally, be connected with a user interface (UI) for instructing the apparatus and/or for outputting data. The at least one processor 1600, with the at least one memory 1601 and the computer program code 1606 are arranged to cause the apparatus to at least perform at least the method according to any preceding process, for example as disclosed in relation to the flow diagram of FIG. 15 and related features thereof.

FIG. 17 shows a non-transitory media 1700 according to some embodiments. The non-transitory media 170₀ is a computer readable storage medium. It may be e.g. a CD, a DVD, a USB stick, a blue ray disk, etc. The non-transitory media 1100 stores computer program instructions, causing an apparatus to perform the method of any preceding process for example as disclosed in relation to the flow diagram of FIG. 15 and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. Apparatus, comprising:
means for receiving image data from a camera;
means for identifying, from the image data, a remote device having one or more interactive graphical elements displayed on a capacitive touchscreen thereof;
means for receiving user input indicating an interaction with at least one of the one or more interactive graphical elements; and
means for transmitting, based on the received user input, one or more electromagnetic field or electromagnetic interference signals towards the one or more interactive graphical elements displayed on the capacitive touchscreen for effecting an interaction with the at least one of the one or more interactive graphical elements.

2. The apparatus of claim 1, further comprising:
means for causing display, by a display screen, of a user interface comprising one or more graphical indications corresponding to the one or more interactive graphical elements displayed by the capacitive touchscreen of the remote device.

3. The apparatus of claim 2, wherein the one or more graphical indications comprise enlarged versions of the one or more interactive graphical elements represented in the image data received from the camera.

4. The apparatus of claim 2 or claim 3, wherein the one or more graphical indications comprise a plurality of graphical indications having the same or similar spatial arrangement as a corresponding plurality of interactive graphical elements displayed by the capacitive touchscreen of the remote device.

5. The apparatus of any of claims 2 to 4, wherein the display screen comprises a touchscreen and wherein the means for receiving user input is configured to receive one or more touch or gestural inputs made with respect to the one or more graphical indications.

6. The apparatus of any of claims 2 to 4, wherein the display screen comprises a display screen of an augmented reality device and wherein the user input receiving means is configured to receive one or more of a voice input and a gestural input associated with the augmented reality device.

7. The apparatus of any of claims 2 to 6, wherein the display screen is configured to display the received image data and the one or more graphical indications, such that the one or more graphical indications overlie the image data.

8. The apparatus of any of claims 2 to 7, further comprising:
means for displaying, by the display screen, one or more guide indicators for indicating how to align the apparatus with the remote device so that the one or more electromagnetic field or electromagnetic interference signals are directed towards the one or more interactive graphical elements on the capacitive touchscreen of the remote device.

9. The apparatus of any preceding claim, wherein the identifying means is configured to identify, from the received image data, a type of the remote device and, based on the identified type of the remote device, to identify properties of the one or more interactive graphical elements displayed by the capacitive touchscreen of the remote device.

10. The apparatus of any preceding claim, further comprising:
means for detecting that the remote device requires input of first authentication credentials, by means of the one or more interactive graphical elements displayed by the capacitive touchscreen of the remote device; and
means for storing first authentication credentials for input to the remote device;
wherein
the means for receiving user input is configured to receive one or more second authentication credentials for locally authenticating a user to the apparatus, and
if the user is locally authenticated using the one or more second authentication credentials, the transmitting means is configured to transmit one or more electromagnetic field or electromagnetic interference signals towards the one or more interactive graphical elements on the capacitive touchscreen of the remote device for effecting input of the first authentication credentials.

11. The apparatus of claim 10, wherein the one or more first authentication credentials comprise one or more of:
a passcode; and
a predetermined gestural input.

12. The apparatus of claim 10 or claim 11, wherein the one or more second authentication credentials comprise one or more of:
biometric data;
a passcode;
a predetermined gestural input; and
an audio passphrase.

13. The apparatus of any preceding claim, further comprising:
means for storing received user input indicating one or more interactions with at least one of the one or more interactive graphical elements,
wherein the transmitting means is configured to transmit the stored user input, responsive to one or both of:
receipt of a transmit input received from a user; and
detection that the apparatus is aligned in a predetermined way with the remote device.

14. The apparatus of any preceding claim, wherein the apparatus comprises one of a smartphone, tablet computer, smartwatch, augmented reality headset or smartglasses.

15. A method, comprising:
receiving image data from a camera;
identifying, from the image data, a remote device having one or more interactive graphical elements displayed by a capacitive touchscreen;
receiving user input indicating an interaction or interactions with at least one of the one or more interactive graphical elements; and
transmitting, based on the received user input, one or more electromagnetic field or electromagnetic interference signals towards the one or more interactive graphical elements for effecting an interaction or interactions with the at least one of the one or more interactive graphical elements.
